# EUROPEAN PATENT SPECIFICATION

(11) **EP 3 741 506 B1**
(45) Date of publication and mention of the grant of the patent: **09.03.2022**
(21) Application number: 20173385.4
(22) Date of filing: 07.05.2020
(51) Int. Cl.: B23Q 11/00, F16P 3/12, B23Q 11/08

(54) **SAFETY SYSTEM FOR A MACHINE TOOL**
SICHERHEITSSYSTEM FÜR EINE WERKZEUGMASCHINE
SYSTEME DE SECURITE POUR UNE MACHINE-OUTIL

(30) Priority: 17.05.2019 IT 201900006972
(43) Date of publication of application: 25.11.2020
(73) Proprietor: SCM Group S.p.A., 47921 Rimini (RN) (IT)
(72) Inventor: FERRI, Mirko, 47921 RIMINI (IT)
(74) Representative: Tiburzi, Andrea

(56) References cited:
- EP-A1- 2 628 993
- EP-A1- 2 845 702
- DE-U1-202015 004 517

## Description

The present invention relates to a safety system for a machine tool.

More specifically, the invention relates to a safety system particularly suitable for machining centers equipped with a fixed base, on which resting the pieces to be worked, and a movable portal structure above the base and containing the tools and/or devices to perform one or more workings on the pieces.

In the following the description will be directed to a safety system applied to a work center for working panels, but it is clear that the same should not be considered limited to this specific use, since this safety system can be applied to any machine tool equipped with at least one moving part so as to vary, during its operation, the horizontal dimensions of the machine itself.

Various safety systems for machine tools are known. For example Patent Document EP 2 628 993 A1 discloses a a safety system for a machine tool of the type provided with at least one movable element, said safety system comprising:
- a delimitation structure which is provided with an opening for access of an operator;
- a first presence detector which defines, together with said delimitation structure, a first zone;
- a second presence detector defining, together with said delimitation structure, a second zone;
- a control system to control the movement speed of said at least one movable element, said control system being operatively connected with said first presence detector, such that when an operator accesses said first zone while interfering with said first presence detector, said control system orders said at least one movable element to move with a lower speed, and such that said control system orders said at least one movable element to stop when an operator moves from said first zone to said second zone while interfering with said second presence detector.

The object of the present invention is to provide an alternative to traditional safety systems for machine tools.

Another object of the invention is to provide a safety system for a machine tool that is particularly efficient.

A further object of the invention is to provide a safety system for a machine tool, which allows to minimize the risks for people or operators, close to the machine tool.

It is therefore specific object of the present invention a safety system for a machine tool of the type provided with at least one movable element, said safety system comprising: a delimitation structure which is provided with an opening for access of an operator; a first presence detector which defines, together with said delimitation structure, a first zone which is configured to receive, when in use, said machine tool; a first voluntary activation device which is placed outside said first zone; a second presence detector defining, together with said delimitation structure, a second zone inside said first zone and, together with said delimitation structure and said first presence detector, a third zone which is placed in said first zone between said opening and said second zone; at least one passage being defined between said third zone and said second zone to allow an operator to pass from said third zone to said second zone, and vice versa; a second voluntary activation device which is placed in said third zone and operatively connected with said first voluntary activation device and said second presence detector; and a control system to control the movement speed of said at least one movable element, said control system being operatively connected with said first presence detector and said first voluntary activation device, such that when an operator accesses said third zone while interfering with said first presence detector, said control system orders said at least one movable element to move with a first speed, and such that when said first voluntary activation device is subsequently activated said control system orders said at least one movable element to move with a second speed which is higher than said first speed, and such that when an operator moves from said third zone to said second zone while interfering with said second presence detector, said control system orders said at least one movable element to move with said second speed after activating, sequentially, said second voluntary activation device and said first voluntary activation device.

Advantageously according to the invention, the safety system may comprise a third voluntary activation device which is placed in said second zone, preferably in sight of said second voluntary activation device.

Preferably according to the invention, said third voluntary activation device may be operatively connected with said second voluntary activation device such that when an operator accesses said second zone from said third zone while interfering with said second presence detector, said control system orders said at least one movable element to move with said second speed after activating, sequentially, said third voluntary activation device, said second voluntary activation device and said first voluntary activation device.

Further according to the invention, said system may comprise a time calculation device for calculating the time passed since activating said third voluntary activation device, said second voluntary activation device being activable, in use, within a predetermined time range which is calculated by said time calculation device since activating said third voluntary activation device.

Still according to the invention, said safety system may comprise a time calculation device for calculating the time passed since activating said second voluntary activation device, said first voluntary activation device being activable, in use, within a predetermined time range which is calculated by said time calculation device since activating said second voluntary activation device.

Conveniently according to the invention, said safety system may comprise at least one signaling device which is placed at said first voluntary activation device and/or said second voluntary activation device, and which is configured such as to provide, in use, an operator with at least one signal until said time calculation device finishes calculating said predetermined time range.

Further according to the invention, said at least one signal may be a visual or acoustic signal.

Preferably according to the invention, said safety system may comprise a fourth voluntary activation device which is placed at a blind zone of said second zone and, preferably, in sight of said third voluntary activation device.

Still according to the invention, said fourth voluntary activation device may be operatively connected with said third voluntary activation device such that when an operator accesses said second zone from said third zone while interfering with said second presence detector, said control system orders said at least one movable element to move with said second speed after activating, sequentially, said fourth voluntary activation device, said third voluntary activation device, said second voluntary activation device and said first voluntary activation device.

Advantageously according to the invention, said first presence detector or said second presence detector may comprise a photocell or a laser scan detector or an ultrasound device or a mat provided with at least one pressure sensor for detecting the passage and/or presence of an operator in a determined zone.

It is also object of the present invention a safety method for a machine tool of the type which is provided with at least one movable element, said safety method comprising the steps of: providing a safety system of the type mentioned above; detecting a presence by said first presence detector; ordering said at least one movable element to move with said first speed; detecting a presence by said second presence detector; detecting, sequentially, a change in the state of said second voluntary activation device and said first voluntary activation device; and ordering said at least one movable element to move with said second speed.

Preferably according to the invention, said safety system may comprise a third voluntary activation device which is placed in said second zone, preferably in sight of said second voluntary activation device, said safety method also comprising the step of detecting a change in the state of said third voluntary activation device before said step of detecting, sequentially, a change in the state of said second voluntary activation device and said first voluntary activation device.

Advantageously according to the invention, said safety system may comprise a time calculation device, said safety method also comprising the step of calculating by said time calculation device a predetermined time range since performing said step of detecting a change in the state of said second voluntary activation device or said third voluntary activation device.

Conveniently according to the invention, said safety system may comprise at least one signaling device which is placed at said first voluntary activation device and/or said second voluntary activation device; said safety method also comprising the step of providing, by said at least one signaling device, an operator with at least one signal until said time calculation device finishes calculating a predetermined time range.

Further according to the invention, said safety system may comprise a fourth voluntary activation device which is placed at a blind zone of said second zone and, preferably, in sight of said third voluntary activation device, said safety method also comprising the step of activating said fourth voluntary activation device before said step of activating said third voluntary activation device.

The present invention will be now described, for illustrative but not limitative purposes, according to its preferred embodiments, with particular reference to the enclosed figure wherein a safety system for a machine tool according to the present invention is schematically shown.

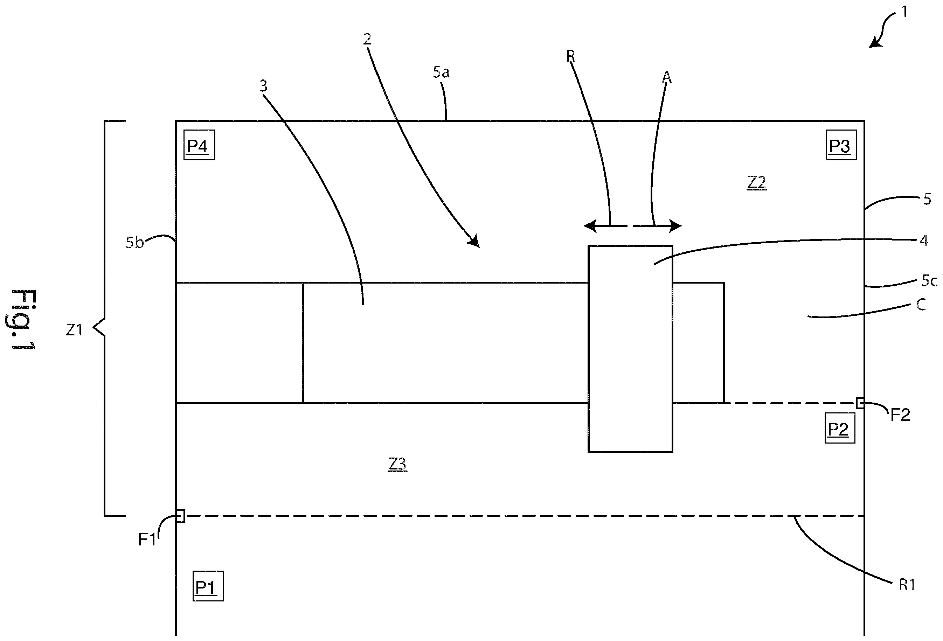

Referring to figure 1, with 1 it is indicated a safety system for a machine tool 2 equipped with a control logic and comprising a fixed base 3, on which resting the pieces to be worked, and with respect to which a portal structure 4 can move along the two opposite directions indicated by arrows A, R, bearing at least one tool or device suitable for performing at least one operation on the pieces resting on the base 3.

The safety system 1 provides for the use of a fence 5, inside which the aforementioned machine tool 2 is arranged in a position such that a passage C is defined between the latter and the fence 5.

In this case, the fence 5 is composed of a central straight section 5a, a first straight lateral section 5b, and a second straight lateral section 5c, arranged in such a way as to form, overall, a substantially C-shaped structure.

The safety system 1 comprises a first photocell F1, positioned in at least one of the two lateral sections 5b, 5c of the fence 5, so that the beam R1 produced by this first photocell F1 defines, together with the three sections 5a, 5b, 5c of the fence 5, a first zone Z1, in which the machine tool 2 is completely contained.

The first photocell F1 is operatively connected to the control logic of the machine tool 2, in such a way that when the relative beam R1 is interrupted, for example because of the passage of a person, the same control logic causes the reduction of the operating movement speed of the portal structure 4 (for example, about 90 m/min ) up to a reduced movement speed (for example, about 25 m/min ), which is not dangerous in case of impact of this structure 4 with a person.

The safety system 1 also includes a second photocell F2 positioned in correspondence of the passage C, so that the beam R2 produced by this second photocell F2 identifies, together with the three sections 5a, 5b, 5c of the fence 5, a second zone Z2.

The second photocell F2 is also arranged in such a way that the relative beam R2 defines a third zone Z3, together with the first beam R1 of the first photocell F1, the two lateral sections 5b, 5c of the fence 5 and the same machine tool 2.

According to some variants of the safety system 1 according to the present invention, the first photocell F1 and the second photocell F2 can be replaced with laser scan detectors, ultrasound devices, mats equipped with pressure sensors or other types of presence detectors.

Close to the first zone Z1, but outside of it, there is a first button P1 operatively connected to the first photocell F1 to command its operation, or activation, so that if the first button P1 is pressed following the interruption of the beam R1 of the first photocell F1, the aforementioned control logic provides for the restoration of the operating movement speed of the portal structure 4 from the relative reduced movement speed.

In the third zone Z3, near the passage C, there is a second button P2 operatively connected to the first button P1, and to the second photocell F2, to command the operation or the activation of the latter.

In the second zone Z2 there is instead a third button P3, and a fourth button P4 arranged, respectively, in correspondence to a first corner zone, between the second lateral section 5c and the central section 5a of the fence 5, and a second zone at an angle between the first lateral section 5b and the central section 5a of the fence 5.

In particular, the third button P3 is arranged in an optical view of the aforementioned second button P2, so that the person who is close to the second button P2 has a view of the third button P3.

The fourth button P4 is instead arranged in the blind part of the second zone Z2, i.e. in a position substantially opposite to the second button P2, in an optical view of the third button P3, so that the person who is close to the third button P3 has the view of the fourth button P4.

The fourth button P4 is also operatively connected to the third button P3, which in turn is operatively connected to the second button P2.

The aforementioned first P1, second P2, third P3 and fourth P4 button are also operationally connected to a control system, which manages and coordinates their operation.

The first button P1, the second button P2, the third button P3 and the fourth button P4 are therefore operationally connected to each other, so that when a person first crosses the beam R1 of the first photocell F1, and then the beam R2 of the second photocell F2, to access the second zone Z2, it is necessary to press in sequence the second button P2, and the first button P1, or the third button P3, the second button P2, and the first button P1, or the fourth button P4, the third button P3, the second button P2 and the first button P1, so that the aforementioned control logic restores the operating movement speed of the portal structure 4 from the relative reduced movement speed.

The security system 1 described above allows therefore any person who has accessed the second zone Z2 passing through the third zone Z3 and the passage C, to be able to circulate in these zones in a safe state until he has left the whole first zone Z1.

In fact, when a person crosses the beam R1 of the first photocell F1 to access the third zone Z3, this first photocell F1 sends a corresponding signal to the aforementioned control logic, which consequently provides for the reduction of the operating movement speed of the portal structure 4 at reduced movement speed.

In case of this person decides, at this point, to exit from the third zone Z3, or from the entire first zone Z1, crossing again the first beam R1, it would be sufficient that the same person presses, or activates, the first button P1 to command the restoration of the operating movement speed of the portal structure 4.

If, on the other hand, the aforementioned person crosses, from the third zone Z3, the second beam R2 of the second photocell F2 to access the second zone Z2 to perform, for example, a maintenance intervention on the machine tool 2, the second photocell F2 would transmit a respective signal to record this access to the control logic.

In this case, to restore the operating movement speed of the portal structure 4, the same person should, during the exit route from the second zone Z2, sequentially press the second button P2, and the first button P1, or the third button P3, the second P2 button and the first P1 button, or the fourth P4 button, the third P3 button, the second P2 button, and the first P1 button, so that such reset can only occur after the same person has left the entire first zone Z1.

According to further variants of the safety system 1 according to the present invention, the first button P1, the second button P2, the third button P3, and the fourth button P4 can be of the touch, or electromechanical, or contactless type, or key selectors, or fingerprints readers, or other voluntary activation devices.

According to another variant of the safety system 1, the second button P2, the third button P3, and the fourth button P4 can each be associated with a timer, so that if the button sequentially following each of these is not pressed within a certain period of time, the sequence is interrupted or canceled by the control system, and therefore in this case the person leaving the second zone Z2 will have to start the sequence of activation buttons to restore the operating movement speed of the portal structure 4, once the same person has left the third zone Z3, and has also pressed the first button P1.

In the latter variant of the safety system 1, a visual signal of the written or colored type, or an audible signal associated with the aforementioned timer can be optionally provided in each of said first P1, second P2, third P3, and fourth P4 button, so that said signal remains active until the expected time interval has expired, or vice versa; in this way the person leaving the second zone Z2, when he reaches one of these buttons, can immediately realize, visually and/or acoustically, if the time available to press the just reached button has ended or is not ended yet.

As can be seen from the foregoing description, the safety system according to the present invention allows, in case of a person gets too close to the machine tool while operating, that the reduction of the operating speed of this machine is automatically arranged to a value not dangerous for people, until the same person orders, through a voluntary operation, the restoration of the normal operating speed when he is in a non-dangerous area, which is precisely the area where the aforementioned first button P1 is located.

This prevents, therefore, that cases of impacts may occur between the person and the machine tool operating at full speed, or with high operating speeds, and therefore potentially dangerous for people.

The present invention has been described for illustrative but not limitative purposes, according to its preferred embodiments, but it is to be understood that modifications and/or changes can be introduced by those skilled in the art without departing from the scope of the invention as defined in the enclosed claims.

## Claims

1. Safety system (1) for a machine tool (2) of the type provided with at least one movable element (4), said safety system (1) comprising:
- a delimitation structure (5) which is provided with an opening for access of an operator;
- a first presence detector (F1, R1) which defines, together with said delimitation structure (5), a first zone (Z1) which is configured to receive, when in use, said machine tool (2);
- a first voluntary activation device (P1) which is placed outside said first zone (Z1);
- a second presence detector (F2, R2) defining, together with said delimitation structure (5), a second zone (Z2) inside said first zone (Z1) and, together with said delimitation structure (5) and said first presence detector (F1, R1), a third zone (Z3) which is placed in said first zone (Z1) between said opening and said second zone (Z2); at least one passage (C) being defined between said third zone (Z3) and said second zone (Z2) to allow an operator to pass from said third zone (Z3) to said second zone (Z2), and vice versa;
- a second voluntary activation device (P2) which is placed in said third zone (Z3) and operatively connected with said first voluntary activation device (P1) and said second presence detector (F2, R2); and
- a control system to control the movement speed of said at least one movable element (4), said control system being operatively connected with said first presence detector (F1, R1) and said first voluntary activation device (P1),
such that when an operator accesses said third zone (Z3) while interfering with said first presence detector (F1, R1), said control system orders said at least one movable element (4) to move with a first speed, and such that when said first voluntary activation device (P1) is subsequently activated said control system orders said at least one movable element (4) to move with a second speed which is higher than said first speed, and
such that when an operator moves from said third zone (Z3) to said second zone (Z2) while interfering with said second presence detector (F2, R2), said control system orders said at least one movable element (4) to move with said second speed after activating, sequentially, said second voluntary activation device (P2) and said first voluntary activation device (P1).

2. Safety system (1) according to claim 1, **characterized in that** the safety system comprises a third voluntary activation device (P3) which is placed in said second zone (Z2), preferably in sight of said second voluntary activation device (P2).

3. Safety system (1) according to claim 2, **characterized in that** said third voluntary activation device (P3) is operatively connected with said second voluntary activation device (P2) such that when an operator accesses said second zone (Z2) from said third zone (Z3) while interfering with said second presence detector (F2, R2), said control system orders said at least one movable element (4) to move with said second speed after activating, sequentially, said third voluntary activation device (P3), said second voluntary activation device (P2) and said first voluntary activation device (P1).

4. Safety system (1) according to claim 3, **characterized in that** it comprises a time calculation device for calculating the time passed since activating said third voluntary activation device (P3), said second voluntary activation device (P2) being activable, in use, within a predetermined time range which is calculated by said time calculation device since activating said third voluntary activation device (P3).

5. Safety system (1) according to any one of the preceding claims, **characterized in that** it comprises a time calculation device for calculating the time passed since activating said second voluntary activation device (P2), said first voluntary activation device (P1) being activable, in use, within a predetermined time range which is calculated by said time calculation device since activating said second voluntary activation device (P2).

6. Safety system (1) according to claim 4 or 5, **characterized in that** it comprises at least one signaling device which is placed at said first voluntary activation device (P1) and/or said second voluntary activation device (P2), and which is configured such as to provide, in use, an operator with at least one signal until said time calculation device finishes calculating said predetermined time range.

7. Safety system (1) according to claim 6, **characterized in that** said at least one signal is a visual or acoustic signal.

8. Safety system (1) according to any one of the claims 2 to 7, **characterized in that** it comprises a fourth voluntary activation device (P4) which is placed at a blind zone of said second zone (Z2) and, preferably, in sight of said third voluntary activation device (P3).

9. Safety system (1) according to claim 8, **characterized in that** said fourth voluntary activation device (P4) is operatively connected with said third voluntary activation device (P3) such that when an operator accesses said second zone (Z2) from said third zone (Z3) while interfering with said second presence detector (F2, R2), said control system orders said at least one movable element (4) to move with said second speed after activating, sequentially, said fourth voluntary activation device (P4), said third voluntary activation device (P3), said second voluntary activation device (P2) and said first voluntary activation device (P1).

10. Safety system (1) according to any one of the preceding claims, **characterized in that** said first presence detector (F1, R1) or said second presence detector (F2, R2) comprises a photocell or a laser scan detector or an ultrasound device or a mat provided with at least one pressure sensor for detecting the passage and/or presence of an operator in a determined zone.

11. Safety method for a machine tool (2) of the type which is provided with at least one movable element (4), said safety method comprising the steps of:
- providing a safety system (1) according to claim 1;
- detecting a presence by said first presence detector (F1, R1);
- ordering said at least one movable element (4) to move with said first speed;
- detecting a presence by said second presence detector (F2, R2);
- detecting, sequentially, a change in the state of said second voluntary activation device (P2) and said first voluntary activation device (P1); and
- ordering said at least one movable element (4) to move with said second speed.

12. Safety method according to claim 11, **characterized in that** said safety system (1) comprises a third voluntary activation device (P3) which is placed in said second zone (Z2), preferably in sight of said second voluntary activation device (P2), said safety method also comprising the step of detecting a change in the state of said third voluntary activation device (P3) before said step of detecting, sequentially, a change in the state of said second voluntary activation device (P2) and said first voluntary activation device (P1).

13. Safety method according to claim 11 or 12, **characterized in that** said safety system (1) comprises a time calculation device, said safety method also comprising the step of calculating by said time calculation device a predetermined time range since performing said step of detecting a change in the state of said second voluntary activation device (P2) or said third voluntary activation device (P3).

14. Safety method according to claim 13, **characterized in that** said safety system (1) comprises at least one signaling device which is placed at said first voluntary activation device (P1) and/or said second voluntary activation device (P2); said safety method also comprising the step of providing, by said at least one signaling device, an operator with at least one signal until said time calculation device finishes calculating a predetermined time range.

15. Safety method according to any one of claims 12 to 14, **characterized in that** said safety system (1) comprises a fourth voluntary activation device (P4) which is placed at a blind zone of said second zone (Z2) and, preferably, in sight of said third voluntary activation device (P3), said safety method also comprising the step of activating said fourth voluntary activation device (P4) before said step of activating said third voluntary activation device (P3).

## Patentansprüche

1. Sicherheitssystem (1) für eine Werkzeugmaschine (2) der Gattung, die zumindest ein bewegliches Element (4) aufweist, wobei das Sicherheitssystem (1) umfasst:
- eine Begrenzungsstruktur (5), die eine Öffnung für den Zugang einer Bedienperson aufweist;
- einen ersten Anwesenheitsdetektor (F1, R1) der, zusammen mit der Begrenzungsstruktur (5), eine erste Zone (Z1) definiert, die dafür ausgelegt ist, im Gebrauch die Werkzeugmaschine (2) aufzunehmen;
- eine erste Vorrichtung zur willentlichen Aktivierung (P1), die außerhalb der ersten Zone (Z1) angeordnet ist;
- einen zweiten Anwesenheitsdetektor (F2, R2), der, zusammen mit der Begrenzungsstruktur (5), eine zweite Zone (Z2) innerhalb der ersten Zone (Z1) definiert und, zusammen mit der Begrenzungsstruktur (5) und dem ersten Anwesenheitsdetektor (F1, R1), eine dritte Zone (Z3) definiert, die in der ersten Zone (Z1) zwischen der Öffnung und der zweiten Zone (Z2) angeordnet ist; zumindest einen Durchgang (C), der zwischen der dritten Zone (Z3) und der zweiten Zone (Z2) definiert ist, um es einer Bedienperson zu ermöglichen, von der dritten Zone (Z3) zur zweiten Zone (Z2) und umgekehrt zu gelangen;
- eine zweite Vorrichtung zur willentlichen Aktivierung (P2), die in der dritten Zone (Z3) angeordnet und mit der ersten Vorrichtung zur willentlichen Aktivierung (P1) und dem zweiten Anwesenheitsdetektor (F2, R2) wirkverbunden ist; und
- ein Steuersystem zur Steuerung der Bewegungsgeschwindigkeit des zumindest einen beweglichen Elements (4), wobei das Steuersystem mit dem ersten Anwesenheitsdetektor (F1, R1) und der ersten Vorrichtung zur willentlichen Aktivierung (P1) wirkverbunden ist,
so dass, wenn sich eine Bedienperson in die dritte Zone (Z3) begibt und dabei der erste Anwesenheitsdetektor (F1, R1) belegt wird, das Steuersystem dem zumindest einen beweglichen Element (4) befiehlt, sich mit einer ersten Geschwindigkeit zu bewegen, und so dass, wenn die erste Vorrichtung zur willentlichen Aktivierung (P1) in der Folge aktiviert wird, das Steuersystem dem zumindest einen beweglichen Element (4) befiehlt, sich mit einer zweiten Geschwindigkeit zu bewegen, die höher ist als die erste Geschwindigkeit, und
so dass, wenn sich eine Bedienperson aus der dritten Zone (Z3) in die zweite Zone (Z2) begibt und dabei der zweite Anwesenheitsdetektor (F2, R2) belegt wird, das Steuersystem dem zumindest einen beweglichen Element (4) befiehlt, sich mit der zweiten Geschwindigkeit zu bewegen, nachdem aufeinanderfolgend die zweite Vorrichtung zur willentlichen Aktivierung (P2) und die erste Vorrichtung zur willentlichen Aktivierung (P1) aktiviert wurden.

2. Sicherheitssystem (1) nach Anspruch 1, **dadurch gekennzeichnet, dass** das Sicherheitssystem eine dritte Vorrichtung zur willentlichen Aktivierung (P3) umfasst, die in der zweiten Zone (Z2) angeordnet ist, vorzugsweise in Sichtverbindung mit der zweiten Vorrichtung zur willentlichen Aktivierung (P2).

3. Sicherheitssystem (1) nach Anspruch 2, **dadurch gekennzeichnet, dass** die dritte Vorrichtung zur willentlichen Aktivierung (P3) mit der zweiten Vorrichtung zur willentlichen Aktivierung (P2) wirkverbunden ist, so dass, wenn sich eine Bedienperson von der dritten Zone (Z3) in die zweite Zone (Z2) begibt und dabei der zweite Anwesenheitsdetektor (F2, R2) belegt wird, das Steuersystem dem zumindest einen beweglichen Element (4) befiehlt, sich mit der zweiten Geschwindigkeit zu bewegen, nachdem aufeinanderfolgend die dritte Vorrichtung zur willentlichen Aktivierung (P3), die zweite Vorrichtung zur willentlichen Aktivierung (P2) und die erste Vorrichtung zur willentlichen Aktivierung (P1) aktiviert wurden.

4. Sicherheitssystem (1) nach Anspruch 3, **dadurch gekennzeichnet, dass** es eine Zeitzählvorrichtung umfasst, um die seit der Aktivierung der dritten Vorrichtung zur willentlichen Aktivierung (P3) verstrichene Zeit zu berechnen, wobei die zweite Vorrichtung zur willentlichen Aktivierung (P2) im Gebrauch innerhalb eines vorbestimmten Zeitintervalls aktivierbar ist, das von der Zeitzählvorrichtung ab der Aktivierung der dritten Vorrichtung zur willentlichen Aktivierung (P3) berechnet wird.

5. Sicherheitssystem (1) nach einem der vorhergehenden Ansprüche, **dadurch gekennzeichnet, dass** es eine Zeitzählvorrichtung umfasst, um die seit der Aktivierung der zweiten Vorrichtung zur willentlichen Aktivierung (P2) verstrichene Zeit zu berechnen, wobei die erste Vorrichtung zur willentlichen Aktivierung (P1) im Gebrauch innerhalb eines vorbestimmten Zeitintervalls aktivierbar ist, das von der Zeitzählvorrichtung ab der Aktivierung der zweiten Vorrichtung zur willentlichen Aktivierung (P2) berechnet wird.

6. Sicherheitssystem (1) nach Anspruch 4 oder 5, **dadurch gekennzeichnet, dass** es zumindest eine Meldevorrichtung umfasst, die an der ersten Vorrichtung zur willentlichen Aktivierung (P1) und/oder an der zweiten Vorrichtung zur willentlichen Aktivierung (P2) angeordnet und dafür ausgelegt ist, im Gebrauch einer Bedienperson zumindest ein Meldesignal bereitzustellen, bis die Zeitzählvorrichtung die Berechnung des vorbestimmten Zeitintervalls abgeschlossen hat.

7. Sicherheitssystem (1) nach Anspruch 6, **dadurch gekennzeichnet, dass** das zumindest eine Meldesignal ein optisches oder akustisches Signal ist.

8. Sicherheitssystem (1) nach einem der Ansprüche von 2 bis 7, **dadurch gekennzeichnet, dass** es eine vierte Vorrichtung zur willentlichen Aktivierung (P4) umfasst, die in einer blinden Zone der zweiten Zone (Z2) angeordnet ist, und vorzugsweise in Sichtverbindung mit der dritten Vorrichtung zur willentlichen Aktivierung (P3).

9. Sicherheitssystem (1) nach Anspruch 8, **dadurch gekennzeichnet, dass** die vierte Vorrichtung zur willentlichen Aktivierung (P4) mit der dritten Vorrichtung zur willentlichen Aktivierung (P3) wirkverbunden ist, so dass, wenn sich eine Bedienperson von der dritten Zone (Z3) in die zweite Zone (Z2) begibt und dabei der zweite Anwesenheitsdetektor (F2, R2) belegt wird, das Steuersystem dem zumindest einen beweglichen Element (4) befiehlt, sich mit der zweiten Geschwindigkeit zu bewegen, nachdem aufeinanderfolgend die vierte Vorrichtung zur willentlichen Aktivierung (P4), die dritte Vorrichtung zur willentlichen Aktivierung (P3), die zweite Vorrichtung zur willentlichen Aktivierung (P2) und die erste Vorrichtung zur willentlichen Aktivierung (P1) aktiviert wurden.

10. Sicherheitssystem (1) nach einem der vorhergehenden Ansprüche, **dadurch gekennzeichnet, dass** der erste Anwesenheitsdetektor (F1, R1) oder der zweite Anwesenheitsdetektor (F2, R2) eine Fotozelle oder einen Laserscan-Detektor oder eine Ultraschallvorrichtung oder eine Matte mit zumindest einem Drucksensor zur Erkennung des Durchgangs und/oder der Anwesenheit einer Bedienperson in einer bestimmten Zone umfasst.

11. Sicherheitsverfahren für eine Werkzeugmaschine (2) der Gattung, die zumindest ein bewegliches Element (4) aufweist, wobei das Sicherheitsverfahren folgende Schritte beinhaltet:
- Bereitstellen eines Sicherheitssystems (1) nach Anspruch 1;
- Erkennen einer Anwesenheit durch den ersten Anwesenheitsdetektor (F1, R1);
- Erteilen eines Befehls an das zumindest eine bewegliche Element (4), sich mit der ersten Geschwindigkeit zu bewegen;
- Erkennen einer Anwesenheit durch den zweiten Anwesenheitsdetektor (F2, R2);
- aufeinanderfolgendes Erkennen einer Zustandsänderung der zweiten Vorrichtung zur willentlichen Aktivierung (P2) und der ersten Vorrichtung zur willentlichen Aktivierung (P1); und
- Erteilen eines Befehls an das zumindest eine bewegliche Element (4), sich mit der zweiten Geschwindigkeit zu bewegen.

12. Sicherheitsverfahren nach Anspruch 11, **dadurch gekennzeichnet, dass** das Sicherheitssystem (1) eine dritte Vorrichtung zur willentlichen Aktivierung (P3) umfasst, die in der zweiten Zone (Z2) angeordnet ist, vorzugsweise in Sichtverbindung mit der zweiten Vorrichtung zur willentlichen Aktivierung (P2), wobei das Sicherheitsverfahren auch den Schritt des Erkennens einer Zustandsänderung der dritten Vorrichtung zur willentlichen Aktivierung (P3) umfasst, der vor dem Schritt des aufeinanderfolgenden Erkennens einer Zustandsänderung der zweiten Vorrichtung zur willentlichen Aktivierung (P2) und der ersten Vorrichtung zur willentlichen Aktivierung (P1) erfolgt.

13. Sicherheitsverfahren nach Anspruch 11 oder 12, **dadurch gekennzeichnet, dass** das Sicherheitssystem (1) eine Zeitzählvorrichtung umfasst, wobei das Sicherheitsverfahren ferner den Schritt des von der Zeitzählvorrichtung durchgeführten Berechnens eines vorbestimmten Zeitintervalls seit der Durchführung des Schritts des Erkennens einer Zustandsänderung der zweiten Vorrichtung zur willentlichen Aktivierung (P2) oder der dritten Vorrichtung zur willentlichen Aktivierung (P3) beinhaltet.

14. Sicherheitsverfahren nach Anspruch 13, **dadurch gekennzeichnet, dass** das Sicherheitssystem (1) zumindest eine Meldevorrichtung umfasst, die an der ersten Vorrichtung zur willentlichen Aktivierung (P1) und/oder an der zweiten Vorrichtung zur willentlichen Aktivierung (P2) angeordnet ist; wobei das Sicherheitsverfahren ferner den Schritt des Bereitstellens, durch die zumindest eine Meldevorrichtung, eines Meldesignals für eine Bedienperson beinhaltet, bis die Zeitzählvorrichtung die Berechnung des vorbestimmten Zeitintervalls abgeschlossen hat.

15. Sicherheitsverfahren nach einem der Ansprüche von 12 bis 14, **dadurch gekennzeichnet, dass** das Sicherheitssystem (1) eine vierte Vorrichtung zur willentlichen Aktivierung (P4) umfasst, die in einer blinden Zone der zweiten Zone (Z2) angeordnet ist, und vorzugsweise in Sichtverbindung mit der dritten Vorrichtung zur willentlichen Aktivierung (P3), wobei das Sicherheitsverfahren ferner den Schritt des Aktivierens der vierten Vorrichtung zur willentlichen Aktivierung (P4) vor dem Schritt des Aktivierens der dritten Vorrichtung zur willentlichen Aktivierung (P3) beinhaltet.

## Revendications

1. Système de sécurité (1) pour une machine-outil (2) du type dotée d'au moins un élément mobile (4), ledit système de sécurité (1) comprenant :
- une structure de délimitation (5) qui est dotée d'une ouverture pour l'accès d'un opérateur ;
- un premier détecteur de présence (F1, R1) qui définit, avec ladite structure de délimitation (5), une première zone (Z1) qui est configurée pour recevoir, lors de l'utilisation, ladite machine-outil (2) ;
- un premier dispositif à activation volontaire (P1) qui est placé à l'extérieur de ladite première zone (Z1) ;
- un deuxième détecteur de présence (F2, R2) définissant, avec ladite structure de délimitation (5), une deuxième zone (Z2) à l'intérieur de ladite première zone (Z1) et, avec ladite structure de délimitation (5) et ledit premier détecteur de présence (F1, R1), une troisième zone (Z3) qui est située dans ladite première zone (Z1) entre ladite ouverture et ladite deuxième zone (Z2) ; au moins un passage (C) étant défini entre ladite troisième zone (Z3) et ladite deuxième zone (Z2) pour permettre à un opérateur de passer de ladite troisième zone (Z3) à ladite deuxième zone (Z2), et inversement ;
- un deuxième dispositif à activation volontaire (P2) qui est placé dans ladite troisième zone (Z3) et opérationnellement relié audit premier dispositif à activation volontaire (P1) et audit deuxième détecteur de présence (F2, R2) ; et
- un système de contrôle pour contrôler la vitesse de déplacement dudit au moins un élément mobile (4), ledit système de contrôle étant opérationnellement relié audit premier détecteur de présence (F1, R1) et audit premier dispositif à activation volontaire (P1),
de manière à ce que, lorsqu'un opérateur accède à ladite troisième zone (Z3) en interférant avec ledit premier détecteur de présence (F1, R1), ledit système de contrôle commande audit au moins un élément mobile (4) de se déplacer avec une première vitesse, et de manière à ce que, lorsque ledit premier dispositif à activation volontaire (P1) est ensuite activé, ledit système de contrôle commande audit au moins un élément mobile (4) de se déplacer avec une deuxième vitesse qui est supérieure à ladite première vitesse, et
de manière à ce que, lorsqu'un opérateur se déplace de ladite troisième zone (Z3) à ladite deuxième zone (Z2) en interférant avec ledit deuxième détecteur de présence (F2, R2), ledit système de contrôle commande audit au moins un élément mobile (4) de se déplacer avec ladite deuxième vitesse après l'activation, en séquence, dudit deuxième dispositif à activation volontaire (P2) et dudit premier dispositif à activation volontaire (P1).

2. Système de sécurité (1) selon la revendication 1, **caractérisé en ce que** le système de sécurité comprend un troisième dispositif à activation volontaire (P3) qui est placé dans ladite deuxième zone (Z2), de préférence dans le champ visuel dudit deuxième dispositif à activation volontaire (P2).

3. Système de sécurité (1) selon la revendication 2, **caractérisé en ce que** ledit troisième dispositif à activation volontaire (P3) est opérationnellement relié audit deuxième dispositif à activation volontaire (P2) de manière à ce que, lorsqu'un opérateur accède à ladite deuxième zone (Z2) depuis ladite troisième zone (Z3) en interférant avec ledit deuxième détecteur de présence (F2, R2), ledit système de contrôle commande audit au moins un élément mobile (4) de se déplacer avec ladite deuxième vitesse après l'activation, en séquence, dudit troisième dispositif à activation volontaire (P3), dudit deuxième dispositif à activation volontaire (P2) et dudit premier dispositif à activation volontaire (P1).

4. Système de sécurité (1) selon la revendication 3, **caractérisé en ce qu'**il comprend un dispositif de calcul de temps pour calculer le temps écoulé à compter de l'activation dudit troisième dispositif à activation volontaire (P3), ledit deuxième dispositif à activation volontaire (P2) pouvant être activé, en utilisation, dans les limites d'un intervalle de temps prédéfini qui est calculé par ledit dispositif de calcul de temps à compter de l'activation dudit troisième dispositif à activation volontaire (P3).

5. Système de sécurité (1) selon l'une quelconque des revendications précédentes, **caractérisé en ce qu'**il comprend un dispositif de calcul de temps pour calculer le temps écoulé à compter de l'activation dudit deuxième dispositif à activation volontaire (P2), ledit premier dispositif à activation volontaire (P1) pouvant être activé, en utilisation, dans les limites d'un intervalle de temps prédéfini qui est calculé par ledit dispositif de calcul de temps à compter de l'activation dudit deuxième dispositif à activation volontaire (P2).

6. Système de sécurité (1) selon la revendication 4 ou 5, **caractérisé en ce qu'**il comprend au moins un dispositif de signalisation qui est placé au niveau dudit premier dispositif à activation volontaire (P1) et/ou dudit deuxième dispositif à activation volontaire (P2), et qui est configuré de manière à fournir à un opérateur, en utilisation, au moins un signal jusqu'à ce que ledit dispositif de calcul de temps termine de calculer ledit intervalle de temps prédéfini.

7. Système de sécurité (1) selon la revendication 6, **caractérisé en ce que** ledit au moins un signal est un signal visuel ou sonore.

8. Système de sécurité (1) selon l'une quelconque des revendications de 2 à 7, **caractérisé en ce qu'**il comprend un quatrième dispositif à activation volontaire (P4) qui est placé dans une zone aveugle de ladite deuxième zone (Z2) et, de préférence, dans le champ visuel dudit troisième dispositif à activation volontaire (P3).

9. Système de sécurité (1) selon la revendication 8, **caractérisé en ce que** ledit quatrième dispositif à activation volontaire (P4) est opérationnellement relié audit troisième dispositif à activation volontaire (P3) de manière à ce que, lorsqu'un opérateur accède à ladite deuxième zone (Z2) depuis ladite troisième zone (Z3) en interférant avec ledit deuxième détecteur de présence (F2, R2), ledit système de contrôle commande audit au moins un élément mobile (4) de se déplacer avec ladite deuxième vitesse après l'activation, en séquence, dudit quatrième dispositif à activation volontaire (P4), dudit troisième dispositif à activation volontaire (P3), dudit deuxième dispositif à activation volontaire (P2) et dudit premier dispositif à activation volontaire (P1).

10. Système de sécurité (1) selon l'une quelconque des revendications précédentes, **caractérisé en ce que** ledit premier détecteur de présence (F1, R1) ou ledit deuxième détecteur de présence (F2, R2) comprend une cellule photoélectrique ou un détecteur à balayage laser ou un dispositif à ultrasons ou un tapis doté d'au moins un capteur de pression pour détecter le passage et/ou la présence d'un opérateur dans une zone donnée.

11. Procédé de sécurité pour une machine-outil (2) du type dotée d'au moins un élément mobile (4), ledit procédé de sécurité comprenant les étapes consistant à :
- fournir un système de sécurité (1) selon la revendication 1 ;
- détecter une présence au moyen dudit premier détecteur de présence (F1, R1) ;
- commander audit au moins un élément mobile (4) de se déplacer avec ladite première vitesse ;
- détecter une présence au moyen dudit deuxième détecteur de présence (F2, R2) ;
- détecter, en séquence, un changement d'état dudit deuxième dispositif à activation volontaire (P2) et dudit premier dispositif à activation volontaire (P1) ; et
- commander audit au moins un élément mobile (4) de se déplacer avec ladite deuxième vitesse.

12. Procédé de sécurité selon la revendication 11, **caractérisé en ce que** ledit système de sécurité (1) comprend un troisième dispositif à activation volontaire (P3) qui est placé dans ladite deuxième zone (Z2), de préférence dans le champ visuel dudit deuxième dispositif à activation volontaire (P2), ledit procédé de sécurité comprenant aussi l'étape consistant à détecter un changement d'état dudit troisième dispositif à activation volontaire (P3) avant ladite étape consistant à détecter, en séquence, un changement d'état dudit deuxième dispositif à activation volontaire (P2) et dudit premier dispositif à activation volontaire (P1).

13. Procédé de sécurité selon la revendication 11 ou 12, **caractérisé en ce que** ledit système de sécurité (1) comprend un dispositif de calcul de temps, ledit procédé de sécurité comprenant aussi l'étape consistant à calculer, au moyen dudit dispositif de calcul de temps, un intervalle de temps prédéfini à compter de l'exécution de ladite étape de détection d'un changement d'état dudit deuxième dispositif à activation volontaire (P2) ou dudit troisième dispositif à activation volontaire (P3).

14. Procédé de sécurité selon la revendication 13, **caractérisé en ce que** ledit système de sécurité (1) comprend au moins un dispositif de signalisation qui est placé au niveau dudit premier dispositif à activation volontaire (P1) et/ou dudit deuxième dispositif à activation volontaire (P2) ; ledit procédé de sécurité comprenant aussi l'étape consistant à fournir à un opérateur, au moyen dudit au moins un dispositif de signalisation, au moins un signal jusqu'à ce que ledit dispositif de calcul de temps termine de calculer un intervalle de temps prédéfini.

15. Procédé de sécurité selon l'une quelconque des revendications de 12 à 14, **caractérisé en ce que** ledit système de sécurité (1) comprend un quatrième dispositif à activation volontaire (P4) qui est placé dans une zone aveugle de ladite deuxième zone (Z2) et, de préférence, dans le champ visuel dudit troisième dispositif à activation volontaire (P3), ledit procédé de sécurité comprenant aussi l'étape consistant à activer ledit quatrième dispositif à activation volontaire (P4) avant ladite étape consistant à activer ledit troisième dispositif à activation volontaire (P3).
